Europäisches Patentamt

(19) European Patent Office

Office européen des brevets

(11) Publication number: **0 211 685 B1**

(12) # EUROPEAN PATENT SPECIFICATION

(45) Date of publication of patent specification:
06.03.91 Bulletin 91/10

(51) Int. Cl.[5]: **B01F 5/04**, C02F 1/66

(21) Application number: **86306334.3**

(22) Date of filing: **15.08.86**

(54) Ejector, paticularly for the neutralization of aqueous alkaline solutions by carbon dioxide.

(30) Priority: **16.08.85 BR 8503919**

(43) Date of publication of application:
**25.02.87 Bulletin 87/09**

(45) Publication of the grant of the patent:
**06.03.91 Bulletin 91/10**

(84) Designated Contracting States:
**BE DE FR IT**

(56) References cited:
**EP-A- 0 037 513
DE-A- 2 352 917
DE-A- 2 410 574
DE-A- 2 454 526
DE-A- 3 325 969
FR-A- 2 315 983
FR-A- 2 560 405
US-A- 4 166 790
US-A- 4 474 477**

(73) Proprietor: **LIQUID CARBONIC INDUSTRIAS
S/A
Avenida Rio Branco, No. 57 - 13th Floor
Rio de Janeiro Rio de Janeiro (BR)**

(72) Inventor: **Durao, Pedro Loureiro
Rua Guimaraes Rosa, 203 Flat 401
Rio de Janeiro Rio de Janeiro (BR)**
Inventor: **Pessoa, Adonai Alvino
Rua Felizardo Gomes, 45 Flat 201
Rio de Janeiro Rio de Janeiro (BR)**

(74) Representative: **Pendlebury, Anthony et al
PAGE, WHITE & FARRER 54 Doughty Street
London WC1N 2LS (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an ejector, and in particular to an ejector to be used for injecting $CO_2$ into alkaline solutions for neutralizing those alkaline solutions.

Carbon dioxide is being used as a neutralizer of aqueous alkaline solutions in lieu of strong acids.

Known processes which employ $CO_2$ show low efficiency rates of from 20 to 50% because the mixing of the gas and the aqueous solution, and consequently the reaction of the gas with the alkaline element, do not take place rapidly and are physically difficult because of the difficulties in forming a liquid-gas mixture.

This is all the more difficult as pH values become higher thereby requiring a greater flow of $CO_2$.

In addition there is a natural tendency for $CO_2$ bubbles to enter and exit the water without a reaction having occurred.

On the other hand, the greater a $CO_2$ bubble, the more difficult its reaction with water will be.

Conventional ejectors, which are devices used with the object of promoting the mixture of $CO_2$ and water, are built around Herschel type Venturi tubes which are designed almost exclusively for measuring the flow of fluids in closed ducts.

These Venturi tubes consist basically of four main sections, namely : a cylindical entrance section, a converging section, a reduced diameter (bottleneck) cylindrical section and an exit diverging section.

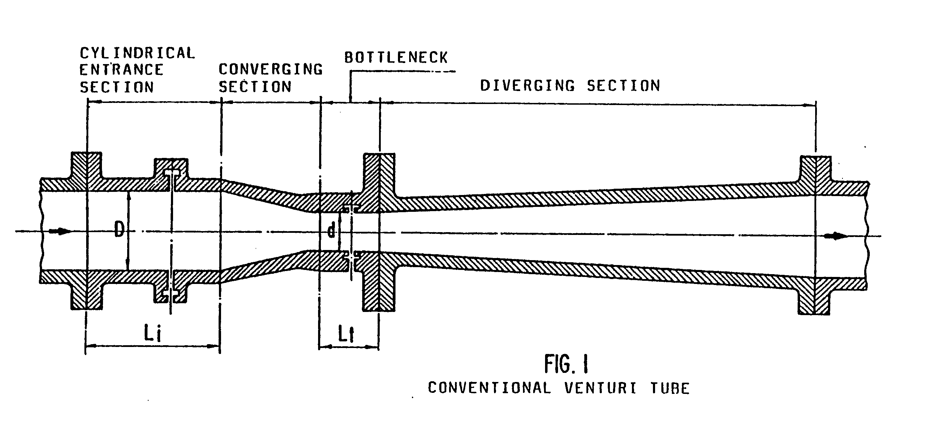

Figure 1 shows this known type of Venturi in detail.

FR-A-P2315983 discloses an injector-mixer comprising a converging inlet section, an intermediate section wherein gas is injected into a liquid passing therethrough from the inlet section, and a diverging exit section.

DE-A-2454526 discloses a device for neutralizing alkaline solutions in which inter alia, $CO_2$ is injected into the solution which has been passed through a converging inlet end of an injector.

The present invention aims to achieve efficiency levels of about 904 through a perfect mixture of the two fluids, one in the liquid phase (water) and the other in the gas phase ($CO_2$), by incorporating changes into the conventional Venturi tube. These changes, based on studies of reactions between the liquid and the gas phase, properties of solutions and their alkaline components, have made it possible to develop a new type of ejector which is the subject of this invention.

The present invention accordingly provides an ejector for use in a process for the neutralization of an aqueous alkaline solution with $CO_2$ gas, the ejector comprising a converging inlet section which promotes an increase of speed of the solution by transfer thereof from one section of larger diameter to one of smaller diameter ; an intermediate section and a diverging exit section, characterised in that the intermediate section comprises a tube which is provided with a plurality of micro-holes therethrough, a plurality of hollow needles also extending through the tube, the said micro-holes and needles being adapted to inject $CO_2$ gas at different points around and within the liquid flow whereby the liquid-$CO_2$ reaction takes place in the intermediate section and in that in the diverging exit section a turbulent mixture regime between the liquid phase and the $CO_2$ in gas form occurs, the neutralization reaction being complemented by the mixture.

The present invention further provides a method of neutralizing aqueous alkaline solutions with $CO_2$ gas, the method comprising the steps of :-

(a) passing the aqueous alkaline solution through an ejector comprising a converging inlet end, an intermediate section and an exit end ; and

(b) injecting $CO_2$ gas into the solution as the solution passes through the intermediate section, characterised in that the $CO_2$ gas is injected at a plurality of points around and within the liquid flow and in that the exit end is diverging.

The present invention will now be described by way of example only, with reference to the accompanying drawings, in which :-

Figure 1 shows a cross-section through a conventional Venturi tube ;

Figure 2 shows a view, partly in cross-section, through an ejector in accordance with the present invention ;

Figure 3 is an enlarged view, partly in cross-section, of part of the ejector of Figure 2 ;

Figure 4 is an exploded cross-sectional view of the ejector of Figure 2 ; and

Figure 5 is a further cross-sectional view of an ejector in accordance with the present invention.

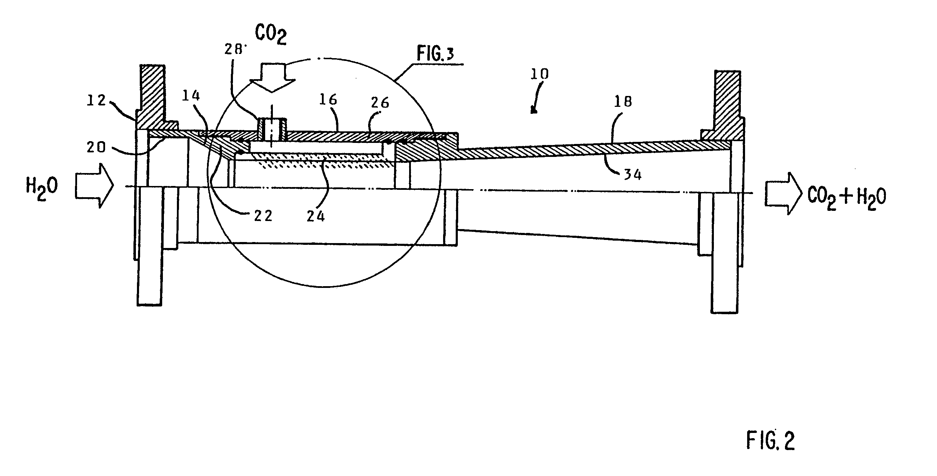

Figures 2 to 5 show an ejector developed for the $CO_2$ process which is the most important part of the entire system for neutralizing alkaline effluents.

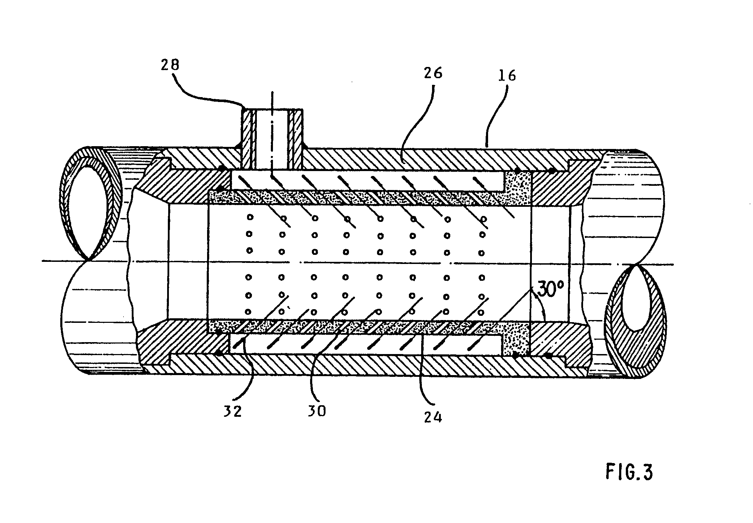

Referring to Figures 2 and 3, an ejector 10 comprises, in turn, a cylindrical entrance section 12, a converging section 14, an intermediate section 16 and a diverging exit section 18. The cylindrical entrance section 12 comprises an annular wall 20 which is integral with the converging section 14 which comprises an inwardly converging circumferential wall 22. The intermediate section 16 comprises an inner tubular member 24 and an outer tubular member 26 which are coaxial. The outer tubular member 26 surrounds the inner tubular member 24 thereby to define an annular chamber therebetween. The outer tubular member 26 is provided with a threaded coupling 28 for connection to a source of carbon dioxide. The inner tubular member 24 (bottleneck section of ejector 10) has a number of holes 30 drilled therethrough distributed over the area of the inner tubular member 24. Each hole 30 has a diameter of from 0.5 to 0.6 mm and is inclined at an angle of 60° to the longitudinal axis of the ejector 10. A plurality of hollow needles 32 extend from the chamber 26-24 through the inner tubular member 24 and into the central cavity of the ejector 10. The hollow needles 32 are also inclined to the longitudinal axis of the ejector and at the same angle thereto as the holes 30. As is shown in Figure 3, each hollow needle 32 is inclined at an angle of 30° to the direction of the flow of water through the ejector. The hollow needles have an internal diameter of 0.3 mm and alternate lengths ranging from 25 to 30 mm. The entrance end of the bottleneck section 24 is connected to the converging section 14. The exit end of the bottleneck section 24 is connected to the diverging exit section 18 which comprises an outwardly diverging annular wall 34.

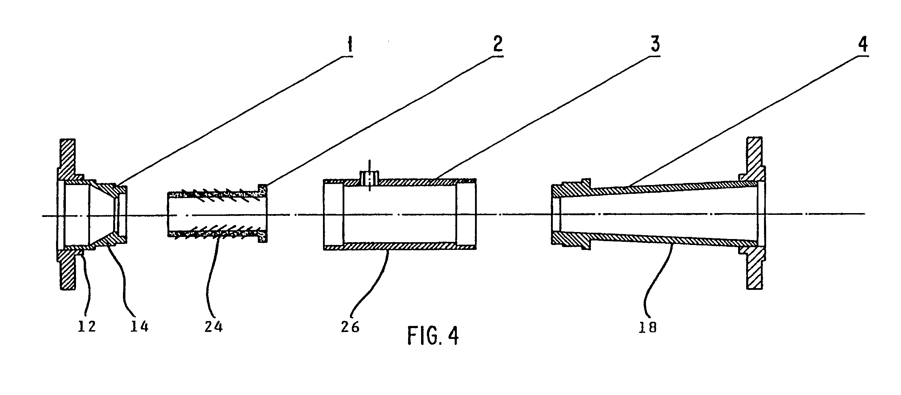

The ejector 10 is constructed in four separable parts for ease of maintenance and cleaning due to the severe operating conditions to which the ejector is in use subjected. The four separable parts are shown in Figure 4 which shows a first part 1 comprising the cylindrical entrance section 12 and the converging section 14, a second part 2 comprising the bottleneck section 24 of the intermediate section 16, a third part 3 comprising the outer tubular member 26 of the intermediate section 16, and a fourth part 4 comprising the diverging exit section 18.

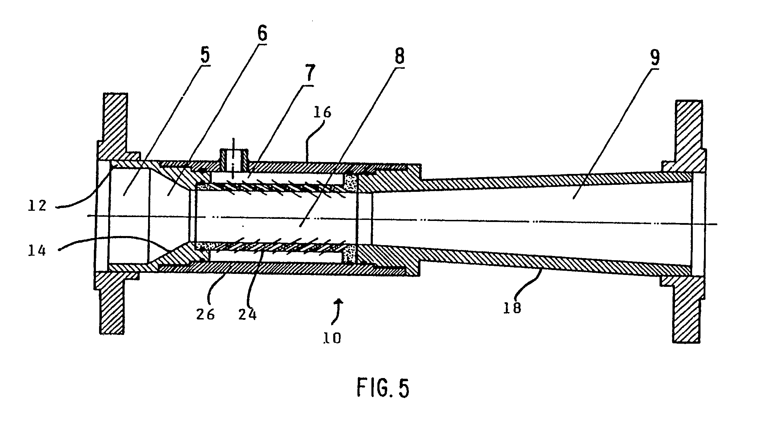

Figure 5 shows the cavities present in the ejector 10 of the present invention. At the input end of the ejector is a cylindrical cavity 5 defined by the cylindrical entrance section 12. Adjacent to the cylindrical cavity 5 is a converging frustoconical cavity 6 defined by the converging section 14. An annular cavity 7 is defined between the inner and outer tubular members, 24, 26. The intermediate section 16 defines a reduced diameter (bottleneck) cylindrical cavity 8 and the diverging section defines a diverging frustoconical cavity 9.

In developing the ejector of the present invention, changes were made in the conventional Venturi tube with a view to achieving efficiency rates of approximately 90%.

The following basic changes are especially noteworthy :

– First change : all concordance radii between the couplings of the following sections were eliminated: cylindrical entrance section 12, converging section 14, reduced diameter (bottleneck) cylindrical section 24 and diverging exit section 18. This has made it possible to produce a turbulence effect inside the ejector 10.

– Second change : the chamber surrounding the entire reduced cylinder (bottleneck) section 24 has been adapted to the system. This chamber possesses an entry for $CO_2$ via the threaded coupling 28. This change is shown in detail in Figure 2.

– Third change : the ejector bottleneck 24 is constructed of an easy to grind material, such as teflon (Trade Mark) mixed with fibreglass, in order to allow the drilling therethrough of the micro-holes 30 having a diameter of from 0.5 to 0.6 mm. These micro-holes 30 are distributed over the entire area of the reduced diameter cylindrical section (bottleneck) 24 and inclined at an angle of 60° to the direction of the flow of the water inside this section of the ejector 10.

– Fourth change : along with the micro-holes 30 of a diameter from 0.5 to 0.6 mm, distributed over the entire area of the reduced diameter (bottleneck) cylindrical section 24 of the ejector 10, also needles 32 of an internal diameter of 0.3 mm and alternate lengths ranging from 25 to 30 mm are inserted.

These needles are also inclined at an angle of 30° in the direction of the flow of water. The main purpose of the presence of these needles 32 and of the micro-holes 30 is to promote the injection of $CO_2$ at different points of the cross-section of the water flow through the bottleneck section 24.

The ejector developed is composed basically of three sections :

– converging section 14 : a gain in water speed is achieved through this section since the liquid passes from a larger diameter section into one of lesser diameter ;

– intermediate section 16 : where the gas-liquid reaction takes place.

The $CO_2$ injection takes place through micro-holes 30 located on the surface of the inner tubular member 24, preferentially one of teflon, and also through needles 32 located at an angle of 30° to the surface of the inner tubular member 24 promoting and materially increasing the gas-liquid mixture and consequently the neutralizing reaction.

The micro-holes 30 located on the surface inject gas towards the larger diameter area of the water flow passing through the ejector 10, while the needles 32 inject the gas radially from the center of flow.

– diverging section 18 : it is in this area that the turbulent mixture of the liquid and gas phase occurs, the neutralizing reaction being completed by the mixture.

The ejector is sized in accordance with the water flow of the system.

The ejector which is the subject of this invention is a static item, that is, it has no moving parts, but it uses kinetic energy from the water flow provided by a centrifugal pump to effect the gas-liquid mixture.

The effluent enters the cylindrical entrance section, following this the flow is bottlenecked in the converging section of the ejector. This allows a reduction in static pressure and an increase in speed of flow of the effluent.

This speed reaches its maximum point in the reduced cylinder (bottleneck) section of the ejector and is determined by the formula :

$$V = \frac{Q}{A} \quad \therefore \quad V = 353.67 \frac{Q}{d^2}$$

where :

$V$ = speed of the effluent in the reduced diameter (bottleneck) cylindrical section of the ejector, in meters per second (m/s).

$Q$ = flow of the effluent through the ejector, in cubic meters per hour (m³/h).

$A$ = internal diameter of the reduced diameter (bottleneck) cylindrical section of the ejector in millimeters (mm).

The speed of $17 \pm 3$ m/s proved in practice that which showed the greatest mixture efficiency. Smaller diameters of gas bubbles and consequently greater gas/liquid interaction promote efficiency of reaction of $90 \pm 5\%$ (in relation to theoretical figures) of the gas injected with the alkaline substances present in the water.

These results were obtained for a soda-alkaline system.

The $CO_2$ injection at a pressure of about $2.7 \times 10^5$ to $5.5 \times 10^5$ N/m² (2.7 to 5.5 bar) takes place in the reduced cylinder (bottleneck) section of the ejector for a more even mixture of gas and effluent to take place.

Due to the high speed of the effluent the gas bubbles are reduced to diameters measurable in microns and from this point on are distributed along the cross-section of the flow through the micro-holes and the radially positioned needles.

After receiving the $CO_2$ injection in the reduced cylinder (bottleneck) section, the water flow passes into the diverging section. In this section the flow of water undergoes a loss of speed and a recovery of static pressure, creating an area of great turbulence and promoting efficient mixture of these two phases (liquid and gas), which is facilitated by the presence of $CO_2$ in the-form of micro-bubbles distributed over the entire flow section.

The formula shown below is used to determine flows through Venturi tubes, as specified in FLUIDS METER, THEIR THEORY AND APLICATIONS - ASME Sixt Edition, 1971.

$Q = 0.034752$ C.E.Y. $d^2$ Fa $\sqrt{\rho H_2 \cdot h_w}$ (kg/sec)   ①

Where :

$Q$ = flow of water through the ejector (kg/sec)

$C$ = discharge coefficient, including the effect of the needles = 0.85.

$$E = \text{speed factor} = \frac{1}{\sqrt{1 - \beta^4}}$$

$Y$ = expansion factor, whose value for liquids is equal to 1.

$Fa$ = thermal expansion factor = 1 (depending on the material used). $\rho H_2O$ = specific gravity of water=1 g/cm³

$d$ = diameter of the ejector bottleneck (cm)

$\beta$ = ratio between diameters d/D

$D$ = internal diameter of the ejector entrance (cm)

$h_w$ = height of the water column at 20°C (cm)

$\Delta p$ = differential pressure in kg/cm².

When the formula ① is modified to find the flow in metric units for the various types of ejector developed by the Applicant the result is :

$$\text{QH}_2\text{O} = 0.023 \text{ .C.E.D}^2 \quad \sqrt{\Delta p} \quad \text{(m}^3\text{/h)}$$

4

Where :

$$E = \frac{1}{\sqrt{1 - \beta^4}} \quad \text{(non-dimensional)}$$

d = internal bottleneck diameter (mm)
D = internal diameter of the entrance of the ejector (mm)
$\Delta p$ = differential pressure between entrance pressure and bottleneck pressure (kg/cm$^2$)
Q = flow of the effluent through the ejector in m$^3$/h.
C = discharge coefficient (depending on the ejectors and as adjusted in practice).
It is very important that in the area of the ejector through which the $CO_2$ gas is injected (bottleneck) the speed of the water be as high as possible. Of course this speed is limited by the dimensions of the ejector and the power needed for pumping water through the ejector.

Water passing at high speed through the bottleneck prevents the gas in contact with the bottleneck appearing as macro-bubbles.

Thus, the speed of the water, the even distribution of the gas, the diameters and location of the holes, and the use of needles to inject the gas all combined, allow a perfect homogenization of gas/liquid with gas in the form of thousands of micro-bubbles.

As a result, the use of injected gas is considerably improved to make possible the reaction of the gas with the alkaline substance dissolved in the water

The formula for calculating the speed through the bottleneck is as follows :

$$V = \frac{Q}{A} \quad \therefore \quad V_{H_2}O = 353.67 \frac{Q}{d^2}$$

$V_{H2}O$ = Speed of $H_2O$ in the bottleneck of the ejector (m/secs)
Q = Flow of the water through the ejector (m$^3$/h)
d = internal diameter of the bottleneck (mm)

| EJECTOR | $d_{(mm)}$ | $D_{(mm)}$ | $\beta$ | C | E | $\Delta P$ (x0.07 kg/cm²) | Pressure Drop (x0.07 kg/cm²) | $Q_{(m^3/h)}$ | $V_{m/sec}$ |
|---|---|---|---|---|---|---|---|---|---|
| ø 1 1/2" | 19.0 | 40.9 | 0.464 | 0.95 | 1.024 | 5 | 22% $\Delta_p$ max | ≃ 18 | ≃ 17.60 |
| ø 2" | 26.9 | 52.5 | 0.512 | 0.95 | 1.036 | 5 | 22% $\Delta_p$ max | ≃ 36 | ≃ 17.60 |
| ø 3" | 40.0 | 77.9 | 0.513 | 0.90 | 1.037 | 5 | 25% $\Delta_p$ max | ≃ 77 | ≃ 17.00 |
| ø 4" | 60.0 | 102.0 | 0.588 | 0.90 | 1.065 | 5 | 25% $\Delta_p$ max | ≃177 | ≃ 17.40 |

FORMULAE

$$\beta = \frac{d}{D} \qquad Q = 0.023 \; C \; E \; d^2 \sqrt{\Delta P}$$

$$E = \frac{1}{\sqrt{1 - \beta^4}} \qquad V = 353.67 \; Q/d^2$$

EP 0 211 685 B1

The efficiency of the chemical reaction to neutralize alkaline effluents with $CO_2$ depends closely on the perfect interaction of the mixture of the liquid and gas phases. This is particularly important when the concentration of the alkaline substance is at very low levels, consequently requiring smaller quantities of $CO_2$.

For the neutralization to take place under such conditions it is essential that the gas be dispersed in the form of micro-bubbles throughout the entire volume taken by the flow of the water.

By the use of this type of ejector which is recommended by the practical results recorded, a high reaction efficiency, of about 90% of the theoretical consumption of gas, has been achieved in neutralizing alkaline effluents with $CO_2$.

## Claims

1. An ejector (10) for use in a process for the neutralization of an aqueous alkaline solution with $CO_2$ gas, the ejector (10) comprising a converging inlet section (14) which promotes an increase of speed of the solution by transfer thereof from one section of larger diameter to one of smaller diameter ; an intermediate section (16) and a diverging exit section (18), characterised in that the intermediate section (16) comprises a tube (24) which is provided with a plurality of micro-holes (30) therethrough, a plurality of hollow needles (32) also extending through the tube, the said micro-holes (30) and needles (32) being adapted to inject $CO_2$ gas at different points around and within the liquid flow whereby the liquid-$CO_2$ reaction takes place in the intermediate section (16) and in that in the diverging exit section (18) a turbulent mixture regime between the liquid phase and the $CO_2$ in gas form occurs, the neutralization reaction being complemented by the mixture.

2. An ejector according to Claim 1 wherein the micro-holes (30) are distributed over the entire surface of the intermediate section (16) and at an angle of 30° with respect to the direction of the water flow inside said section (16).

3. An ejector according to Claim 1 or Claim 2 wherein the said needles (32) are at a 30° angle with respect to the surface of the tube (24).

4. An ejector according to Claim 3 wherein the needles (32) at a 30° angle with respect to the surface of the tube (24) possess internal diameters of 0.3 mm and are of alternate lengths of from 25 to 30 mm.

5. An ejector according to Claim 3 wherein the needles (32) are at an angle of 30° with respect to the direction of the water flow.

6. An ejector according to any one of Claims 1 to 6 wherein the tube (24) is constructed of teflon.

7. A method of neutralizing aqueous alkaline solutions with $CO_2$ gas, the method comprising the steps of :-

(a) passing the aqueous alkaline solution through an ejector (10) comprising a converging inlet end (14), an intermediate section (16) and an exit end (18) ; and

(b) injecting $CO_2$ gas into the solution as the solution passes through the intermediate section (16), characterised in that the $CO_2$ gas is injected at a plurality of points around and within the liquid flow and in that the exit end (18) is diverging.

8. A method according to Claim 7 wherein the speed of the alkaline solution in the intermediate section is from 14 to 18 m/s.

9. A method according to Claim 7 or Claim 8 wherein the pressure of the injected $CO_2$ is from $2.7 \times 10^5$ to $5.5 \times 10^5$ N/m² in the intermediate section.

## Ansprüche

1. Ejektor (10) zur Verwendung in einem Verfahren zum Neutralisieren einer wässrigen, alkalischen Lösung mit $CO_2$-Gas, wobei der Ejektor (10)

– einen konvergierenden Eingangsteil (14) umfaßt, welcher einen Anstieg der Geschwindigkeit der Lösung beim Übergang von einem Bereich mit größerem Durchmesser zu einem Bereich mit kleinerem Durchmesser bewirkt ;

– ein zwischenstück (16) und einen sich erweiternden Ausgangsteil (18) umfaßt, **dadurch gekennzeichnet,**

– daß das zwischenstück (16) ein Rohr (24) umfaßt, welches mit einer Vielzahl von durchgehenden Mikroöffnungen (30) versehen ist ;

– daß eine Vielzahl von hohlnadeln (32) vorhanden ist, welche sich ebenfalls durch das Rohr erstrecken ;

– daß die Mikroöffnungen (30) und die Nadeln zur Injektion von $CO_2$-Gas an verschiedenen Punkten rundum und innerhalb des Flüssigkeitsstromes angepaßt sind, wodurch die CO2-Reaktion der flüssigen Phase in dem zwischenstück (16) stattfindet ;

– und daß sich in dem sich erweiterenden Ausgangsteil (18) eine Betriebsbedingung mit einer turbulenten Mischung aus der flüssigen Phase und dem gasförmigen $CO_2$ einstellt, wobei die Neutralisationsreaktion durch die Mischung vervollständigt wird.

2. Ejektor nach Anspruch 1, wobei die Mikroöffnungen (30) über die gesamte Oberfläche des Zwischenstücks (16) verteilt und einen Winkel von 30° zur Richtung der Wasserströmung im Innern des Zwischenstücks (16) bildend angeordnet sind.

3. Ejektor nach Anspruch 1 oder 2, dadurch gekennzeichnet, daß die Nadeln (32) mit einem 30°-Winkel bezüglich der Oberfläche des Rohres (24) angeordnet sind.

4. Ejektor nach Anspruch 3, dadurch gekennzeichnet, daß die mit einem 30°-Winkel bezüglich der Oberfläche der Röhre (24) angeordneten Nadeln einen inneren Durchmesser von 0,3 mm aufweisen und eine abwechselnde Länge von 25 bis 30 mm aufweisen.

5. Ejektor nach Anspruch 3, dadurch gekennzeichnet, daß die Nadeln mit einem 30°-Winkel bezüglich der Richtung der Wasserströmung angeordnet sind.

6. Ejektor nach einem der Ansprüche 1 bis 6, dadurch gekennzeichnet, daß das Rohr (24) aus Teflon hergestellt ist

7. Verfahren zum Neutralisieren einer wässrigen, alkalischen Lösung mit $CO_2$-Gas, wobei das Verfahren folgende Schritte umfaßt :

a) Transport der wässrigen, alkalischen Lösung durch einen Ejektor (10), welcher ein konvergierendes Eingangsteil (14), ein Zwischenstück (16) und ein Ausgangsteil (18) umfaßt ; und

b) Einblasen von $CO_2$-Gas in die Lösung, während diese das Zwischenstück (16) passiert, dadurch gekennzeichnet, daß das $CO_2$-Gas an einer Vielzahl von Punkten rundum und innerhalb des Flüssigkeitsstromes eingeblasen wird und daß das Ausgangsteil (16) sich erweitert.

8. Verfahren nach Anspruch 7, dadurch gekennzeichnet, daß die Fließgeschwindigkeit der alkalischen Lösung in dem Zwischenstück von 14 bis 18 m/s beträgt.

9. Verfahren nach Anspruch 7 oder 8, dadurch gekennzeichnet, daß der Druck des eingeblasenen $CO_2$-Gases von $2,7 \times 10^5$ bis $5,5 \times 10^5$ $N/m^2$ in dem Zwischenstück beträgt.

## Revendications

1. Ejecteur (10) destiné à être utilisé dans un procédé de neutralisation d'une solution aqueuse alcaline avec du $CO_2$ gazeux, l'éjecteur (10) comprenant une section convergente d'admission (14) qui facilite l'accroissement de la vitesse de la solution par son transfert d'une section de plus grand diamètre à une section de plus petit diamètre ; une section intermédiaire (16) et une section divergente de sortie (18), caractérisé en ce que la section intermédiaire (16) comprend un tube (24) qui est muni d'un grand nombre de micro-perforations (30) s'étendant à travers ce tube et d'un grand nombre d'aiguilles creuses (32) s'étendant également à travers le tube, lesdites micro-perforations (30) et lesdites aiguilles (32) étant aptes à l'injection de $CO_2$ gazeux en différents points autour et à l'intérieur du courant de liquide, la réaction entre le liquide et le $CO_2$ s'effectuant ainsi dans la section intermédiaire (16), et en ce que, dans la section divergente de sortie (18), il se produit un régime de mélange turbulent entre la phase liquide et le $CO_2$ à l'état gazeux, la réaction de neutralisation étant complétée par le mélange.

2. Ejecteur suivant la revendication 1, dans lequel les micro-perforations (30) sont réparties sur la totalité de la surface de la section intermédiaire (16) et à un angle de 30° par rapport à la direction de l'écoulement de l'eau à l'intérieur de ladite section (16).

3. Ejecteur suivant la revendication 1 ou la revendication 2, dans lequel les aiguilles (32) sont situées à un angle de 30° par rapport à la surface du tube (24).

4. Ejecteur suivant la revendication 3, dans lequel les aiguilles (32) à un angle de 30° par rapport à la surface du tube (24) possèdent des diamètres intérieurs de 0,3 mm et des longueurs alternées de 25 à 30 mm.

5. Ejecteur suivant la revendication 3, dans lequel les aiguilles (32) sont situées à un angle de 30° par rapport à la direction de l'écoulement de l'eau.

6. Ejecteur suivant l'une quelconque des revendications 1 à 5, dans lequel le tube (24) est construit en Teflon.

7. Procédé de neutralisation de solutions aqueuses alcalines avec du $CO_2$ gazeux, qui comprend les étapes consistant :

EP 0 211 685 B1

(a) à faire passer la solution aqueuse alcaline à travers un éjecteur (10) comprenant une extrémité convergente d'admission (14), une section intermédiaire (16) et une extrémité de sortie (18) ; et

(b) à injecter du $CO_2$ gazeux dans la solution lors du passage de la solution à travers la section intermédiaire (16), caractérisé en ce que le $CO_2$ gazeux est injecté à un grand nombre de points autour et à l'intérieur du courant de liquide et en ce que l'extrémité de sortie (18) est divergente.

8. Procédé suivant la revendication 7, dans lequel la vitesse de la solution alcaline dans la section intermédiaire va de 14 à 18 m/s.

9. Procédé suivant la revendication 7 ou la revendication 8, dans lequel la pression du $CO_2$ injecté est comprise dans l'intervalle de $2,7 \times 10^5$ à $5,5 \times 10^5$ N/m² dans la section intermédiaire.

CYLINDRICAL ENTRANCE SECTION · CONVERGING SECTION · BOTTLENECK · DIVERGING SECTION · D · d · Li · Lt

FIG. 1
CONVENTIONAL VENTURI TUBE

CO$_2$

28

FIG.3

12  14  16  26  10  18

20

H$_2$O

22  24

34

CO$_2$+H$_2$O

FIG. 2

EP 0 211 685 B1

FIG.3

FIG. 4

FIG.5